# EUROPEAN PATENT APPLICATION

(11) **EP 1 286 523 A2**
(43) Date of publication of application: **26.02.2003**
(21) Application number: 02396119.6
(22) Date of filing: 25.07.2002
(51) Int. Cl.: H04M 3/493

(54) **User interface arrangement for service operator interface**

(30) Priority: 14.08.2001 FI 20011641
(71) Applicant: OY Radiolinja AB, 02050 Radiolinja (FI)
(72) Inventor: Valli, Maria, 00500 Helsinki (FI); Lagerbohm, Jarkko, 00500 Helsinki (FI)
(74) Representative: Lahti, Heikki

(57) **Abstract**

User interface arrangement for service provider maintained servers (1, 2, 3) to be applied in an operating environment which comprises of at least one network operator maintained PTN-network (6), and service providers' servers arranged in data transmission communication with the PTN-network, in order to enable data transmission between the PTN-network and the service providers' servers. According to the invention, the user interface arrangement is arranged between PTN (6) and service providers' servers (1, 2, 3), whereby the user interface arrangement forms a user interface portal between the PTN and at least two different service providers' servers connected to the PTN.

## Description

The present invention relates to telecommunications and data transmission. In more detail, the object of the present invention is a user interface arrangement for service provider maintained computer systems or servers, local network and/or network operator maintained supplementary service servers to be applied in an operating environment which comprises of at least one network operator maintained PTN-network, which is an entity of data transmission and communications systems and systems and devices needed for network services and messaging or message transmission, and service provider servers arranged in a data transmission communication with the PTN-network, local network and/or at least one network operator's supplementary service server, in order to enable data transmission between the PTN-network and service providers' servers, network operator's supplementary service servers and/or local network(s).

In this application, a tele or data network, that is a PTN-network, means all such public analog and/or digital telecommunications and data transmission networks, into which terminals are connected by means of a fixed or wireless access i.e. the PTN-network may be:
- a public telephone network, or PSTN-network (Public Switched Telephone Network), which are among others a CSTN (Circuit Switched Telephone Network) and an ISDN-network (Integrated Services Digital Network),
- a public data network, or PSPDN-network (Packet Switched Public Data Network), which are among others a frame relay network and an ATM network (Asymmetric Transfer Mode Network) both an Internet-network,
- a public mobile network, advantageously PLMN-network (Public Land Mobile Network).
Hereinafter such tele and/or data networks are simply referred to as a PTN-network.

A network operator and a service provider in this application means the following.

The network operator is primarily an organisation, company or institution, which offers network services and, for this purpose, maintains PTN network(s), which is a networked entity formed by data transmission and communications systems and devices needed for message transmission or communication. Typically in order to set up connections between network subscriptions and network systems and devices, the network operator takes care of switching and signalling and message transmission in network and between network systems and devices. Typically network services, which are provided to network subscriptions by network operator are control and management services of call or messaging or message transmission, which are integrated into network exchanges and controlled by control signals, such as tone frequency signals or DTMF (Dual Tone Multi Frequency) signals, from network terminal equipment. In addition to the traditional services of telephone, mobile phone and fax communication services, typical network services offered by the network operator are among others different telephone call and call diversion services.

The service provider is primarily an organisation, institution or service operator, which maintains a server device, system or service centre, which will hereinafter be referred to as a server, and into which a connection is set up from a network subscription by means of connection set-up over a fixed and/or mobile network maintained by network operator. The service provider may thus be, besides an independent organisation, telecommunications company, institution or service operator, also a network operator unit. The service provider's server offers telecommunications and/or data transmission services for the network terminal users by means of the server which it maintains on a system platform maintained by the network operator. Such services of a service provider, with which term many times also a mobile and/or Internet operator is called, are typically information and content and communications services including data and/or information, such as for example news, timetable, weather and stock information services, both e-mail, short message, guidance and location information services, both connection services into other tele, data and/or banking service networks. Typical service provider services are, for example
- value added, intelligent network, prepaid, phone card, freephone, payment line, message delivering, e-mail and answering services, both content, information, MMS (Multi Media Service) and connection services,
- Internet portals provided by Internet operators and the WWW (World Wide Web) services accessed via them,
- SMS (Short Message Services), GSM (Global System for Mobile Communication), WAP (Wireless Application Protocol), GPRS (General Packet Radio Services) and UMTS (Universal Mobile Telephone System) services provided by mobile operators and content, information and connection services accessed via them,
- connection payment and banking services provided by financial institutions, such as SOLO® or Kultaraha®.

Frequently also the network operator provides different tele, telecommunications and telematic services, such as value added, intelligent network, prepaid, phone card, freephone, payment line, message delivering, e-mail and answering services for network subscriptions, and access services into other networks for utilising content and information services receivable there from.

Traditionally, the service provider's server is connected to a network exchange, which is maintained by the network operator or an access server or a service portal of another network by, for example, a PCM (Pulse Code Modulation) link, whereby the network operation is advantageously based on an OSI (Open System Interconnection) model published by CCITT in its Red Book, Recommendation X.200. Such OSI model comprises seven functional layers so that the network layers 1 to 3 support network services and layers 1 to 7 support tele services. The problems of traditional set-up, connection or the service portal based principles are that the network subscription is an active connector over network to service provider, that the service provider's server invariably has a user interface to services, and that the service provider's user interface has to be compatible with network operator's access server or service portal or communication link between them. A weakness is also that service providers may differentiate from each other only within the limits of access server or service portal or communication link in question.

The primary object of the present invention is to provide a new and inventive user interface for service operator interface, which user interface would essentially eliminate or at least essentially decrease the problems and weaknesses of traditional connecting over network operator maintained network or interface server or service portal.

This object has generally been achieved by the user interface arrangement for service operator interface mentioned in the beginning so that a user interface arrangement is arranged between the PTN-network (6) and service providers' servers, network operator's supplementary service servers and/or local network, whereby the user interface arrangement forms a user interface portal between the PTN-network and at least two different servers, supplementary service server and/or local network connected to the PTN-network.

In order to accomplish a user interface portal according to the present invention, it is characteristic to the invention that into the PTN-network is integrated a general user interface module which is arranged into a data transmission communication with at least one network exchange or node or router and many different service operators' servers and/or local networks to operate from network interfaces as a user interface into different local networks and/or service providers' services and service portals.

It is characteristic to a certain advantageous embodiment of the invention that the general user interface module is equipped with conversion means or CW element which takes care of telecommunications and data transmission conversions and Web services between the PTN-network and service providers' servers. The general user interface module may function in a cross-connection way so that via the general user interface module all services and/or service portals of service providers which are in a data transmission communication with the general user interface can be utilised from all network subscriptions of the general network regardless of the type of the access network between network subscription and network and/or network type. It is especially advantageous that the conversion means or CW element includes a message transmission service, advantageously a SMS service, and optionally also a transmission service for voice messages and e-mail attachments.

According to a certain advantageous embodiment of the invention, the general user interface module includes an IVR (Interactive Voice Response) device via which the network exchange, node or router is in a data transmission communication with the user interface module. Thus it is advantageous according to the invention that, for storing user settings, user data, greetings set from the network subscription, messages meant for the network subscription and messages sent from network subscription, the general user interface module includes a storage or database means which is in a duplex data transmission communication with the IVR device and conversion means or CW-element.

Thus, by the general user interface module according to the invention, an unified messaging architecture or UM architecture is provided, which advantageously by means of the IVR device
- stores and repeats greetings set by the network subscrition user, advantageously so that repeating of greetings is time-controlled,
- stores messages meant for the network subscription,
- stores and sends telefax messages,
- functions as a user interface for modifying user settings and data,
- communicates towards the network subscription with many languages,
- functions as a general user interface in order to utilise services and/or service portals of optional service provider, particularly of mobile and/or Internet service providers.

In a certain especially advantageous embodiment of the invention, the IVR device is connected to the network and the storage or database means and the conversion means or CW the element by a PCM link, in which the data transmission is CCS (Common Channel Signalling) or CAS (Channel Associated Signalling) signalling, the data transmission protocol of which is advantageously ISUP (Integrated Services digital network User Part) protocol or TUP (Telephone User Part) protocol according to SS7 (Signalling System 7) system, advantageously the data transmission protocol is ISUP protocol, most advantageously data transmission protocol is ISUPv2 protocol.

According to a certain advantageous embodiment of the invention, the data transmission protocol of the data transmission communication between the conversion means and the local network or the service providers' servers is advantageously TCP/IP (Transmission Control Protocol/Internet Protocol), whereby the data transmission is advantageously data transmission of client-server type which is based on HTTP (Hyper Text Transfer Protocol) application protocol, and that the data transmission protocol of data transmission communication between the conversion means or the CW-element and the local network or the service provider's server is also advantageously TCP/IP protocol, whereby data transmission is advantageously client-server type data transmission which is based on HTTP application protocol.

One embodiment of the invention considered advantageous will now be explained by way of an example, but not limiting to the same, with reference to the accompanying drawing, in which
FIG1. illustrates diagrammatically a user interface of the invention according to the first embodiment considered advantageous, arranged as a general user interface module as a part of the network maintained by network operator.
FIG.2. illustrates diagrammatically a user interface of the invention, according to the second embodiment considered advantageous, arranged as a general user interface module as a part of the network maintained by network operator.

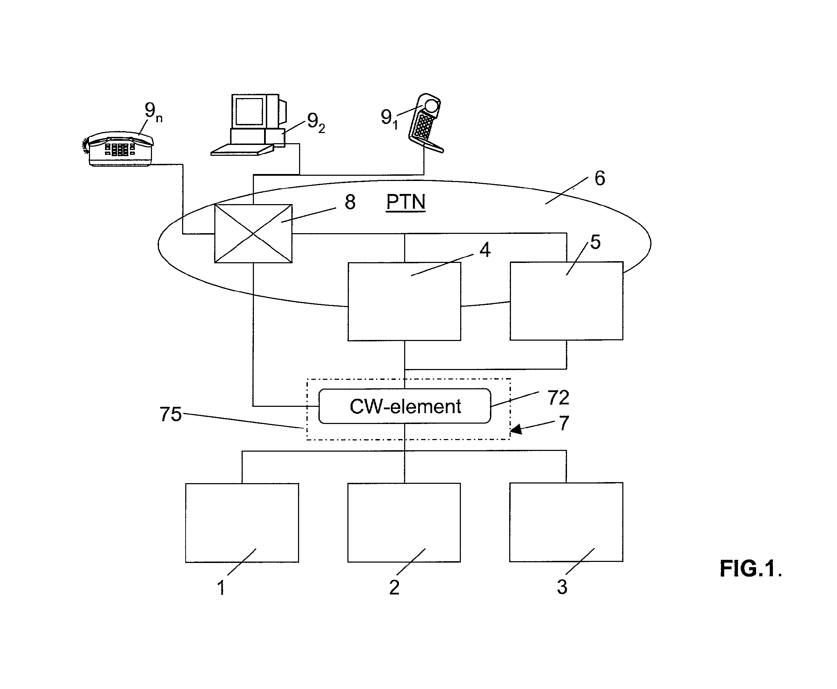

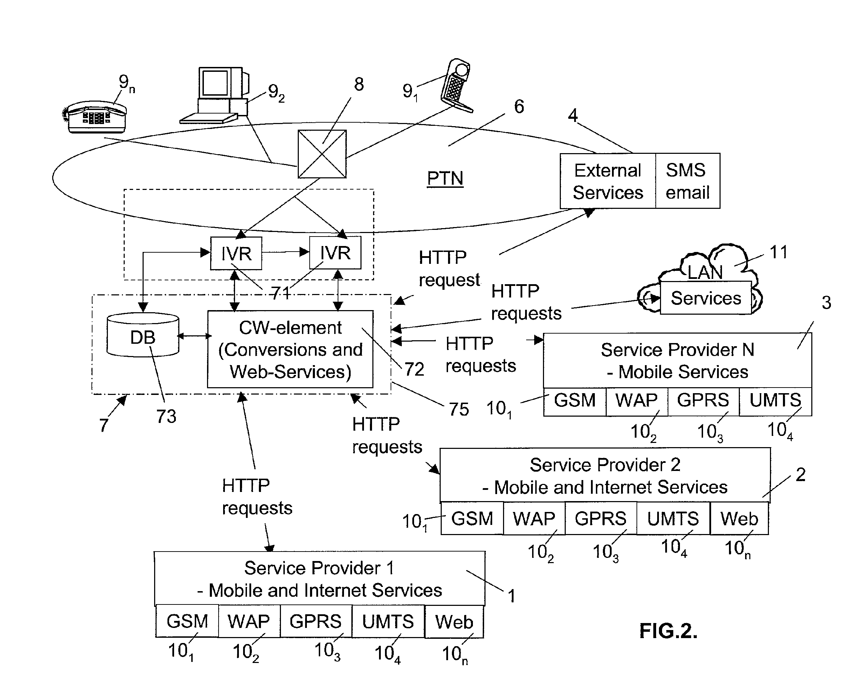

In the first embodiment of the invention illustrated in Figure 1, a user interface arrangement for a computer system or server 1, 2, 3 maintained by a service provider, a local network (11, see FIG.2) and/or a supplementary service server 4 maintained by a network operator for applying in an operating environment, which comprises at least one network operator maintained PTN-network 6, which is an entity composed of data transmission and communications arrangements both of systems and devices needed for network services and messaging or message transmissions, advantageously a mobile or a fixed network, and at least one service provider's server, local network and/or network operator supplementary service server which is in a data transmission communication with the PTN-network, in order to enable data transmission between the PTN-network and the service provider's servers, network operator supplementary service servers and/or local network(s). According to the invention, the user interface arrangement is arranged between the PTN-network 6 and service providers' servers 1, 2, 3, network operator's supplementary service server 4 and/or local network, whereby the user interface arrangement forms a user interface portal between the PTN-network and at least two different servers, supplementary service servers and/or local network connected to the PTN-network.

Advantageously, the user interface portal is composed of user interface module 7, which includes according to the general and first embodiment:
- means for accomplishing interface 75 in the service provider's server 1, 2, 3, in the network operator's supplementary service server 4 and/or in the local network, and
- a CW-element 72 for managing telecommunications and data transmission conversions over the user interface module 7 and for transmitting services, such as Web services, between the PTN-network 6 and servers 1, 2, 3, supplementary service server 4 and/or local network over the user interface module 7.

According to the advantageous embodiment of the invention, the CW element 72 includes a public and a non-public side. The non-public side communicates with all network elements belonging to network operator, which may be, for example SMSC (Short Message Service Center) and MMSC (Multi Media Service Center), different database systems (see FIG.3, 73) and IVR (see FIG.2, 71). The public network elements are, on the other hand, network operator's own systems both for instance systems behind via the Internet-network, which may typically be different platforms ISP-providers (Internet Service Provider) and service operators' own service systems or servers. According to the invention, from CW-element 72 there is a certain specifically defined communication method, that is, telecommunications and data transmission protocol, to the direction of the Internet, local network 11, service providers' servers 1, 2, 3 and network operator's supplementary service servers 4, whereby the ISP- and service providers may, when they desire, produce their own services so that the realised services differentiate from the user subscriptions on the CW-element from each other.

In the second embodiment of the invention illustrated in Figure 2, the user interface arrangement according to the invention for a local network 11, service provider maintained computer systems or servers 1, 2, 3 and/or network operator maintained supplementary service servers 4 is meant to be applied in an operating environment, which includes:
- a network operator maintained network and a computer system, that is, a PTN-network 6, which is advantageously a mobile or a fixed network and which is an entity of data transmission and communications systems and devices needed for network services and message transmission or messaging, and
- service providers' servers 1, 2, 3, network operator maintained supplementary service servers 4 and/or local network 11 arranged for data transmission with PTN-network 6
in order to enable data transmission between the network operator's PTN-network 6 and the service provider servers 1, 2, 3, supplementary service servers 4 or local networks 11.

In this second embodiment, the PTN network 6 is an integrated public user interface module 7 which is arranged in a data transmission communication with at least one PTN-network exchange or node or router 8 and several servers 1, 2, 3 of different service operators or network operator's supplementary service server 4 or local networks 11, whereby the user interface module functions according to the invention from network subscription 9₁₋ₙ as user interface portal, that is as a general user interface for different local networks 11 or service providers' servers 1, 2, 3, 4, which are provided with logics of services and/or service portals 10₁₋ₙ.

In order to enable data transmission on one hand between the general user interface module 7 and servers 1, 2, 3 and supplementary service server 4 and local networks 11 and on the other hand between the general user interface module and the PTN-network 6, the user interface module is provided on the side of the PTN-network 6 with an IVR device 71, via which the PTN-network exchange, node or router 8 is in a data transmission communication with the user interface module, and on the side of the servers 1, 2, 3 and supplementary service server 4 and local network(s) 11, with a conversion means or CW element 72 which takes care of conversions and needed services, such as Web services, in telecommunications and data transmission between the PTN-network 6 and service providers' servers 1, 2, 3 and 4. The general user interface module 7 advantageously functions in a cross-connection way so that via the general user interface module all supplementary services of the network operators and services and/or service portals of local networks 11 or service providers, which are in a data transmission communication with the general user interface, are able to be utilised from all network subscriptions 9₁₋ₙ of the general PTN-network regardless of the type of the access network between the network subscription 9₁₋ₙ and the PTN-network and/or the type of the PTN-network.

As is illustrated in the embodiment of Figure 2, it is advantageous according to the invention that for storing user settings, user data, greetings set from network subscription 9₁₋ₙ, messages meant for the network subscription and messages sent from the network subscription 9₁₋ₙ, the general user interface module 7 includes also a storage or database means 73 for storing user data, which database means is in a duplex data transmission communication with both the IVR device 71 and the conversion means or CW-element 72.

Thus, by the general user interface module 7 according to the invention there is provided an unified messaging architecture or an UM architecture, which especially advantageously by means of the special IVR device 71
- stores and repeats greetings set at network subscription 9₁₋ₙ, advantageously so that repeating of greetings is time-controlled,
- stores messages meant for the network subscription 9₁₋ₙ,
- stores and sends telefax messages,
- functions as the user interface for modifying user settings and data,
- communicates towards the network subscription 9₁₋ₙ with many languages,
- functions as the general user interface in order to utilise services and/or service portals 10₁₋ₙ of a selective local network 11 and/or of a service provider, particularly of a mobile and/or Internet service providers, in network subscription.

In order to accommodate IVR device 71 to the general user interface arrangement and to data transmission with the PTN-network 6 and conversion means or CW-element 72, the IVR device is in connection to the PTN-network 6 and storage or database means 73 and conversion means with PCM link, in which data transmission may be CCS signalling or CAS signalling, however, more advantageously CCS signalling. Thus, the data transmission protocol may be ISUP protocol or TUP protocol according to SS7 system, more advantageously the data transmission protocol is, however, ISUP protocol, most advantageously ISUPv2 protocol.

In order to establish the data transmission communication between the conversion means or CW element 72 and local network 11 or service provider servers 1, 2, 3 or network operator's supplementary service server 4, the data transmission protocol of the data transmission communication may be chosen quite freely, it is advantageous that the data transmission protocol is a general TCP/IP protocol, whereby the data transmission is advantageously data transmission of client-server type which is based on HTTP application protocol.

It is advantageous of the user interface portal or user interface module 7 of the invention that the IVR device 71
- supports Oracle 8.x. system used as the storage or database means 73,
- supports NMS (Network Management System) interface, and that
- O&M (Operation & Maintenance) processes may be managed remotely. Such IVR device 71 may be, for instance, either HP UX 11.x (64 bits) or SUN Solaris 8.x.

According to the second advantageous embodiment of the invention, in order to establish a connection from the general user interface module 7 into the service providers' servers 1, 2, 3, network operator's supplementary service server 4 and local network 11, the general user interface module 7 includes the conversion means or CW-element 72, over which the service provider may construct its own services, such as Internet sites and e-mail interfaces. In addition, it is advantageous that the conversion means or CW element 72 includes a message transmission service by means of, for example, SMS or MMS services. The conversion means or CW-element 72 may also include a transmission service for voice messages and e-mail attachments.

According to the second advantageous embodiment of the invention, the CW element 72 has a public and a non-public side. The non-public side communicates with all network elements belonging to network operator, which may be for instance SMSC and MMSC, different database systems 73 and the IVR 71. The public network elements are, on the other hand, network operator's own systems and, for example, systems connected via the Internet, which may typically be platforms of different ISP-providers and service operators' own service systems or servers. According to the invention, from the CW-element 72 there is a certain specifically defined communication method, i.e. the telecommunications and data transmission protocol, to the direction of the Internet, local network 11, service operators' servers 1, 2, 3 and network operator's supplementary service server 4, whereby the ISP- and service providers may produce their own services so that the realised services differentiate from each other on CW- element from the user interfaces.

For the conversion means or CW 72 existing in the user interface module according to the second embodiment of the invention, it is advantageous that there is a user interface 75 between the same and the service providers' servers 1, 2, 3 into service providers' services 10₁, 10₂, 10₃, 10₄, 10ₙ, and that the conversion means or CW element 72
- supports the Oracle 8.x. system used as the storage or database means 73,
- supports the access protocol to the SMS and MMS exchange, for example CIMD2 protocol which is used in the Nokia Artuse SMS exchange.

The invention is explained above only by a way of its certain advantageous embodiments. Thus, this is not to limit the invention to concern only such individual embodiments, but as is evident to persons skilled in the art, many alternative solutions and variations are possible within the scope of the protection of the new and inventive idea, defined in the accompanying claims.

## Claims

1. User interface arrangement for service provider maintained computer systems or servers (1, 2, 3), local network (11) and/or network operator maintained supplementary service servers (4) to be applied in an operating environment which comprises of at least one network operator maintained PTN-network (6), which is an entity of data transmission and communications systems and systems and devices needed for network services and messaging or message transmission, and service providers' servers arranged in a data transmission communication with the PTN-network, local network and/or at least one network operator's supplementary service server, in order to enable data transmission between the PTN-network and service providers' servers, network operator's supplementary service servers and/or local network(s), **characterised in that** a user interface arrangement is arranged between the PTN-network (6) and service providers' servers (1, 2, 3), network operator's supplementary service server (4) and/or local network (11), whereby the user interface arrangement forms a user interface portal between the PTN-network and at least two different servers, supplementary service server and/or local network connected to the PTN-network.

2. User interface arrangement according to Claim 1, **characterised in that** the user interface portal includes a general user interface module (7) integrated into the PTN-network (6), which is arranged into a data transmission communication with at least one PTN-network (6) exchange or node or router (8) and with several different service operators' servers (1, 2, 3, 4) and/or local network(s) (11) to operate from network subscriptions (9₁₋ₙ) as the user interface into different local networks (11) and/or service providers' services and service portals (10₁₋ₙ).

3. User interface arrangement according to Claim 1 and/or 2, **characterised in that** the general user interface module (7) is provided with a conversion means or CW element (72), whereby the general user interface module (7) functions in a cross-connection way so that via the general user interface module (7) all services and/or service portals of the local networks (11) or service providers in the data transmission communication with the general user interface module can be utilised from all network subscriptions (9₁₋ₙ) of the general PTN-network (6) regardless of the type of access network between network subscription (9₁₋ₙ) and the PTN-network (6) and/or type of PTN-network (6).

4. User interface arrangement according to one of Claims 1 to 3, **characterised in that** in order to establish a connection from the general user interface module (7) into service providers' servers (1, 2, 3, 4), the connection is carried out by the conversion means or CW element (72) of the general user interface module, over which the service provider may construct its own services, such as Internet sites and e-mail interfaces, and that between the general user interface module's (7) conversion means or CW element and service providers' servers (1, 2, 3, 4) there is an access interface (75) into service providers' services (10₁, 10₂, 10₃, 10₄, 10ₙ,).

5. User interface arrangement according to Claim 4, **characterised in that** the conversion means or CW element (72) includes a message transmission service, advantageously a SMS service, and selectively also a transmission service for voice messages and e-mail attachments.

6. User interface arrangement according to one of preceding Claims 1 to 5, **characterised in that** the general user interface module (7) includes an IVR device (71), via which the PTN-network (6) exchange, node or router (8) is in the data transmission communication with the user interface module (7).

7. User interface arrangement according to Claim 6, **characterised in that** for storing user settings, user data, greetings set from the network subscription (9₁₋ₙ), messages meant for the network interface and messages sent from the network subscription (9₁₋ₙ), the general user interface module (7) includes a storage or database means (73), which is in a duplex data transmission communication with the IVR device (71) and the conversion means (72).

8. User interface arrangement according to Claims 6 and 7, **characterised in that** an unified messaging architecture or UM architecture is provided by the general user interface, which architecture advantageously by means of the IVR device (71)
- stores and repeats greetings set from the network subscription (9₁₋ₙ), advantageously so that repeating of greetings is time-controlled,
- stores messages meant for the network subscription (9₁₋ₙ),
- stores and sends telefax messages,
- functions as the user interface for modifying user settings and data,
- communicates towards the network subscription (9₁₋ₙ) with many languages,
- functions as the general user interface in order to utilise services and service portals (10₁₋ₙ) of a selective local network (11) and/or service provider, particularly of mobile and/or Internet service providers.

9. User interface arrangement according to one of Claims 6 to 8, **characterised in that** the IVR device (71) is connected to the PTN-network (6) and the storage or database means (73) and the conversion means (72) with PCM link, in which data transmission is CCS signalling or CAS signalling, the data transmission protocol of which is advantageously ISUP protocol or TUP protocol according to the SS7 system, advantageously data transmission protocol is ISUP protocol, most advantageously data transmission protocol is ISUPv2 protocol.

10. User interface arrangement according to one of Claims 6 to 8, **characterised in that** the data transmission protocol of the data transmission communication between the conversion means (72) and the local network (11) and/or the service provider's server (1, 2, 3, 4) is advantageously TCP/IP protocol, whereby the data transmission is advantageously data transmission of client-server type which is based on HTTP application protocol.
